# EUROPÄISCHE PATENTSCHRIFT

(11) **EP 1 910 110 B1**
(45) Veröffentlichungstag und Bekanntmachung des Hinweises auf die Patenterteilung: **23.09.2009**
(21) Anmeldenummer: 06791549.6
(22) Anmeldetag: 25.07.2006
(51) Int. Cl.: B60H 1/34

(54) **VORRICHTUNG ZUR BELÜFTUNG VON FAHRZEUGEN**
DEVICE FOR VENTILATING VEHICLES
DISPOSITIF DE VENTILATION DE VEHICULES

(30) Priorität: 25.07.2005 DE 102005035248
(43) Veröffentlichungstag der Anmeldung: 16.04.2008
(73) Patentinhaber: Behr GmbH & Co. KG, 70469 Stuttgart (DE)
(72) Erfinder: GROSSMANN, Sebastian, 71696 Möglingen (DE); KLINGLER, Dietrich, 73540 Heubach (DE)
(86) Internationale Anmeldenummer: PCT/EP2006/007303
(87) Internationale Veröffentlichungsnummer: WO 2007/012454

(56) Entgegenhaltungen:
- WO-A2-20/04043721
- DE-A1- 10 339 339
- DE-U1- 20 210 038
- FR-A1- 2 844 484

## Beschreibung

Die vorliegende Erfindung bezieht sich auf eine Vorrichtung zur Belüftung von Fahrzeugen. Derartige Vorrichtungen sind aus dem Stand der Technik bekannt und finden beispielsweise in PKW's oder LKW's zur Belüftung der Fahrgastzelle Anwendung. Die vorliegende Erfindung wird unter Bezugnahme auf einen PKW beschrieben, es wird jedoch darauf hingewiesen, dass die Erfindung auch in anderen Fahrzeugen wie LKW's, Booten, Motorrädern, Schienenfahrzeugen, Flugzeugen oder dergleichen zum Einsatz kommen kann.

Derartige Vorrichtungen zur Belüftung von Fahrzeugen weisen im Stand der Technik eine Düse auf, durch welche hindurch Luft in den Innenraum des Fahrzeugs eintritt. Dabei ist es bekannt, die Düsen so zu gestalten, dass die Ausströmrichtung der durch diese Düsen tretenden Luft veränderbar ist. Dies kann beispielsweise durch schwenkbare Lamellen erreicht werden oder auch durch innerhalb der Düse angeordnete Kanäle, die gegenüber der Düse schwenkbar sind. Aus der DE 103 39 339 A1, die durch Bezugnahme in die hier vorliegende Beschreibung mit einbezogen wird, ist eine Düse für ein Kraftfahrzeug bekannt, die zwei Strömungskanäle aufweist, von denen einer in seiner Ausströmrichtung einstellbar ist.

Zur Einstellung der oben genannten Lamellen bzw. Kanäle sind im Stand der Technik Betätigungseinheiten vorgesehen. Dabei ist es im Stand der Technik erforderlich, separate Betätigungseinheiten für die Horizontal- und die Vertikalverstellung der austretenden Luft vorzusehen. Damit müssen zur genauen Positionierung der Ausströmrichtung jeweils zwei Betätigungseinheiten betätigt werden. Bei diesen Betätigungseinheiten handelt es sich üblicherweise um Rändelräder, die unter beziehungsweise neben der Luftaustrittsöffnung der Düse angeordnet sind.

Auch sind Vorrichtungen bekannt, bei welchen die Betätigungseinheiten auf einem Grill der Düse, also innerhalb der Düse angeordnet sind.

Ferner ist aus dem nächstliegenden Stand der Technik FR 2 844 484 ein Luftausströmer mit einem Betätigungselement für eine Klappe und eine Lamellenanordnung bekannt.

Der vorliegenden Erfindung liegt die Aufgabe zugrunde, eine Vorrichtung zur Belüftung von Fahrzeugen zur Verfügung zu stellen, die es erlaubt, mit nur einer Betätigungseinrichtung die Einstellung der Ausströmrichtung sowohl in horizontaler als auch in vertikaler Richtung festzulegen. Damit soll die Bedienung der Düse einfacher gestaltet werden.

Dies wird erfindungsgemäß durch eine Vorrichtung nach Anspruch 1 sowie eine Betätigungseinrichtung nach Anspruch 19 erreicht. Vorteilhafte Ausführungsformen und Weiterbildungen sind Gegenstand der Unteransprüche.

Die erfindungsgemäße Vorrichtung zur Belüftung von Fahrzeugen weist wenigstens eine Düse auf, deren Ausströmrichtung einstellbar ist. Des Weiteren ist wenigstens eine wenigstens teilweise außerhalb der Düse angeordnete Betätigungseinrichtung vorgesehen, um die Ausströmrichtung der Düse einzustellen. Die Betätigungseinrichtung weist ein erstes um eine erste geometrische Achse drehbares Betätigungselement und ein zweites bezüglich einer zweiten geometrischen Achse bewegbares Betätigungselement zur Einstellung der Ausströmrichtung auf. Daneben weißt.die Betätigungseinrichtung eine Bedieneinrichtung zur Bedienung beider Betätigungselemente auf. Erfindungsgemäß steht die Bedieneinrichtung derart mit dem Betätigungselementen in Verbindung, dass durch eine Bedienung der Bedieneinrichtung in einer ersten Bedienrichtung das erste Betätigungselement und durch eine Bedienung des Bedieneinrichtung in einer zweiten Bedienrichtung das zweite Betätigungselement bewegt wird.

Unter der Ausströmrichtung wird diejenige Richtung verstanden, in der ein vorgegebener Anteil der aus der Düse austretenden Luft bezüglich der Düse austritt beziehungsweise die entsprechende Hauptströmungsrichtung der austretenden Luft.

Unter einem wenigstens teilweise außerhalb der Düse angeordneten Element wird verstanden, dass das betreffende Element insbesondere in Umfangsrichtung außerhalb der Düse bzw. eines Gehäuses der Düse angeordnet ist. Bevorzugt ist die Betätigungseinrichtung seitlich beziehungsweise oberhalb oder unterhalb der Düse angeordnet.

Das erste Betätigungselement ist bezüglich einer ersten geometrischen Achse um wenigstens einen vorgegebenen Winkel, wie z. B. einen Winkel von 30 Grad drehbar. Das zweite Betätigungselement ist um eine zweite Achse bewegbar wobei in diesem Fall das zweite Betätigungselement sowohl um die zweite Achse drehbar als auch beispielsweise in Längsrichtung der zweiten Achse verschiebbar angeordnet sein kann. Auch sind Kombinationen dieser Bewegungseinrichtungen denkbar.

Beide Betätigungselemente dienen zur Einstellung der Ausströmrichtung der Düse. Unter einer Bedieneinrichtung wird eine insbesondere durch den Fahrer oder Benutzer des PKW's bedienbare Einrichtung verstanden mittels derer der Fahrer die Ausströmrichtung der Düse steuern kann.

Unter einer Bedienung der Bedieneinrichtung wird jede Art der Betätigung verstanden wie insbesondere aber nicht ausschließlich ein Drehen, Verschieben, Drücken oder auch Kombinationen aus diesen Betätigungen..Dabei handelt es sich bei der ersten Bedienrichtung um eine bezüglich der zweiten Bedienrichtung unterschiedliche Bedienrichtung. Beispiele für unterschiedliche Bedieneinrichtungen sind Drehen einer Kugel um unterschiedliche Achsen, ein Verschieben eines Betätigungselements in nicht zueinander parallele Richtungen, ein Drücken einerseits und ein Drehen oder Schieben eines Betätigungselements andererseits und dergleichen.

Bevorzugt bewirkt eine Bedienung der Bedieneinrichtung in der ersten Bedienrichtung eine Bewegung nur des ersten Betätigungselements wohingegen eine Bedienung der Bedieneinrichtung nur in der zweiten Bedienrichtung eine Bewegung nur des zweiten Betätigungselements bewirkt. Eine Bewegung der Bedieneinrichtung, welche sowohl eine Komponente in der ersten Bedienrichtung als auch eine Komponente in der zweiten Bedienrichtung aufweist, bewirkt folglich eine Bewegung beider Betätigungselemente.

Bevorzugt ist das erste Betätigungselement über eine erste Bewegungsübertragungseinrichtung und das zweite Betätigungselement über eine zweite Bewegungsübertragungseinrichtung mit der Düse gekoppelt. Dabei können die Bewegungsübertragungseinrichtungen beispielsweise mit Lamellen, die an der Austrittsöffnung der Düse vorgesehen sind, gekoppelt sein oder auch mit einem innerhalb der Düse liegenden Kanal der selbst bewegt werden kann. Bei einer weiteren bevorzugten Ausführungsform kann auch nur eines der Betätigungselemente mit einer Bewegungsübertragungseinrichtung gekoppelt sein.

Unter einer Bewegungsübertragungseinrichtung wird jede Einrichtung verstanden, die geeignet ist, eine Bewegung eines Körpers in eine Bewegung eines anderen Körpers umzusetzen. Im engeren Sinn handelt es sich dabei um mechanische Einrichtungen, die die Bewegung direkt umsetzen. Im weiteren Sinn kann es sich jedoch auch um Motoren, Magnete oder dergleichen handeln, die durch die Bewegung eines Körpers angesteuert werden und einen anderen Körper in Bewegung versetzen.

Bei einer weiteren bevorzugten Ausführungsform erstreckt sich ein kürzester Abstand der geometrischen Achsen, um die die Betätigungselemente drehbar bzw. bewegbar angeordnet sind, von einem Punkt zwischen den Endpunkten der ersten Achse zu einem zweiten Punkt zwischen den Endpunkten der zweiten Achse. Dies bedeutet, dass die beiden geometrischen Achsen beispielsweise in der gleichen Ebene liegen können oder sich in der Projektion aus einer Richtung die senkrecht zu der durch die beiden Achsen aufgespannten Ebene liegt, schneiden. Auch könnten die beiden Achsen parallel zueinander sein zusammenfallen. Dies wäre beispielsweise dann möglich, wenn das Betätigungselement um eine Achse gedreht und bezüglich derselben Achse beziehungsweise einer zu dieser Achse parallelen Achse verschoben wird.

Bevorzugt ist jedoch das zweite Betätigungselement drehbar um die zweite Achse angeordnet wobei besonders bevorzugt die erste Achse und die zweite Achse im Wesentlichen senkrecht zueinander angeordnet sind. Bei einer weiteren bevorzugten Ausführungsform weisen die erste Achse und die zweite Achse einen gemeinsamen Schnittpunkt auf, das heißt sie sind in einer gemeinsamen Ebene angeordnet. Durch diese Ausgestaltung kann erreicht werden, dass im Wesentlichen gleichmäßig durch die beiden Betätigungselemente sämtliche auf einer Halbkugel bzw. einem vorgegebenen Kugelsegment liegende Punkte erreicht werden können.

Bei einer weiteren bevorzugten Ausführungsform weist die Düse einen ersten um eine erste Drehachse schwenkbaren ersten Strömungskanal auf. Dieser Strömungskanal weist bevorzugt einen, kreisförmigen oder elliptischen Querschnitt auf, es sind jedoch auch andere Querschnitte wie polygonale Querschnitte und dergleichen denkbar. Bevorzugt ist der erste Strömungskanal auch um eine zweite Drehachse schwenkbar wobei die zweite Drehachse und die erste Drehachse besonders bevorzugt im Wesentlichen senkrecht zueinander stehen. Dies bedeutet, dass der erste Strömungskanal in zwei zueinander senkrechte Richtungen wie beispielsweise vertikal und horizontal geschwenkt werden kann. Auf diese Weise kann die Ausströmrichtung der aus der Düse austretenden Luft sowohl in vertikaler als auch in horizontaler Richtung geändert werden. Bevorzugt ist der erste Strömungskanal aus wenigstens zwei bezüglich einander schwenkbaren Abschnitten aufgebaut, wobei besonders bevorzugt die Achsen, um die die Abschnitte geschwenkt werden können, zueinander senkrecht stehen.

Bei einer weiteren bevorzugten Ausführungsförm weist die Düse einen zweiten besonders bevorzugt unbeweglichen Strömungskanal auf, wobei der erste Strömungskanal Bevorzugt im Wesentlichen innerhalb des zweiten Strömungskanals angeordnet ist. Dies bedeutet, dass die Luft sowohl durch den ersten, inneren Strömungskanal treten kann als auch durch die Fläche, die zwischen dem Umfangsrand des ersten Strömungskanals und dem Umfangsrand des äußeren zweiten Strömungskanals liegt. Genauer gesagt, wird der zweite Strömungskanal durch diese Fläche gebildet.

Bevorzugt ist die Luftströmung in des ersten beziehungsweise inneren Strömungskanal gerichtet während die Luftströmung in dem äußeren bzw. zweiten Strömungskanal mit einem Drall versehen ist, wobei die äußere Luftströmung insbesondere schraubenartig um den inneren Strömungskanal geführt wird. Aufgrund dieser Drallbeaufschlagung ergibt sich am Austritt eine diffuse Luftströmung.

Die Düse kann auch mehrteilig, insbesondere zweiteilig ausgebildet sein, wobei die beiden Düsenteile einander entsprechend ausgebildet sind, jeweils einen ersten und einen zweiten Strömungskanal aufweisen, und der jeweils erste Strömungskanal bewegbar ist. Auch können mehrere im wesentlichen gleichartige Düsen vorgesehen sein. Bei einer weiteren bevorzugen Ausführungsform weist die Düse schwenkbare Lamellen auf. Diese Lamellen sind, wie oben angeführt, bevorzugt am Ausgang der Düse angeordnet.

Bevorzugt ist wenigstens eine Bewegungsübertragungseinrichtung mit dem ersten Strömungskanal verbunden. Diese bedeutet, dass der erste Strömungskanal in wenigstens einer Richtung durch die Betätigungseinrichtung bewegt werden und insbesondere um eine Achse geschwenkt werden kann.

Bevorzugt ist auch die zweite Bewegungsübertragungseinrichtung mit dem ersten Strömungskanal verbunden. Auf diese Weise wird erreicht, dass der Strömungskanal um beide Achsen mit der Betätigungseinrichtung bewegt werden kann. Es ist jedoch auch möglich, eine Bewegungsübertragungseinrichtung mit Lamellen zu verbinden und auf diese Weise die Luftaustrittsrichtung durch eine Kombination aus einer Bewegung des ersten Strömungskanals und der Lamellen zu verändern.

Bei einer weiteren bevorzugten Ausführungsform weist die Betätigungseinrichtung einen Rahmen auf an dem wenigstens ein Betätigungselement angelenkt ist. Bevorzugt weist der Rahmen einen wesentlichen kreisförmigen Querschnitt auf und die Betätigungselemente sind jeweils in einem Winkelunterschied von 90 Grad zueinander angeordnet.

Bei einer weiteren bevorzugten Ausführungsform ist wenigstens eine Bewegungsübertragungseinrichtung mit wenigstens einem Betätigungselement besonders verbunden. Bevorzugt sind beide Bewegungsübertragungseinrichtungen, besonders bevorzugt über eine Gelenkverbindung mit den beiden Betätigungselementen verbunden sodass eine Bewegung der Betätigungselemente auf eine Bewegung des Strömungskanals beziehungsweise der Lamellen in der Düse übertragen werden kann.

Bei der erfindungsgemäßen Ausführungsform weisen die Betätigungselemente zueinander im Wesentlichen senkrecht angeordnete Führungselemente insbesondere aber nicht ausschließlich in Form von Langlöchern auf. In diesen Führungselementen können weitere Bewegungselemente verschoben beziehungsweise bewegt werden. Die Bedieneinrichtung weist einen Vorsprung auf oder ist mit einem Vorsprung verbunden, der wenigstens teilweise in den Führungselementen verläuft. Dabei kann es sich beispielsweise um einen Stift oder dergleichen handeln, der in Führungsschienen oder Führungsspalten der beiden Betätigungseinrichtungen verläuft. Dies wird unter Bezugnahme auf die Figuren genauer erläutert.

Bei einer weiteren bevorzugten Ausführungsform weist die Bedieneinrichtung eine im Wesentlichen kugelförmige Gestalt auf.

Alternativ kann auch ein Steuerhebel vorgesehen sein, der sich in zwei unterschiedliche oder beliebige Richtungen bewegen lässt.

Die vorliegende Erfindung ist weiterhin auf eine Betätigungseinrichtung insbesondere für eine oben genannte Vorrichtung gerichtet, die ein erstes um eine erste geometrische Achse drehbares Betätigungselement und ein zweites bezüglich einer zweiten geometrischen Achse bewegbares Betätigungselement aufweist sowie eine Bedieneinrichtung zur Bedienung beider Betätigungselemente. Dabei steht erfindungsgemäß die Bedieneinrichtung derart mit dem Betätigungselement in Verbindung, dass durch eine Bedienung der Bedieneinrichtung in einer ersten Bedienrichtung das erste Betätigungselement und durch eine Bedienung der Bedieneinrichtung in einer zweiten Bedienrichtung das zweite Betätigungselement bewegt wird.

Bei der ersten Bewegungsübertragungseinrichtung und der zweiten Bewegungsübertragungseinrichtung handelt es sich bevorzugt um Gestänge, die besonders bevorzugt über Gelenke mit dem Betätigungselement und Elementen der Düse in Verbindung stehen. Es ist jedoch auch denkbar, Zahnräder, sich antreibende Gummiräder, und dergleichen vorzusehen, die die Bewegung übertragen. Auch könnte eine Übertragung der Bewegung über Riemen, Ketten oder dergleichen erfolgen. Daneben könnten als Bewegungsübertragungseinrichtungen Motoren eingesetzt werden die durch die Betätigungselemente gesteuert werden und eine so gesteuerte Bewegung an Elemente der Düse weiter geben.

Die Erfindung ist ferner auf ein Belüftungssystem für ein Fahrzeug mit einer Vorrichtung der oben beschriebenen Art gerichtet. Bevorzugt weist das Belüftungssystem eine Vielzahl derartiger Vorrichtungen d. h. Düsen mit zugehörigen Steuerungen auf. Auch ist es möglich mittels einer Betätigungseinrichtung zwei Düsen simultan zu steuern.

Die Erfindung ist ferner auf ein Kraftfahrzeug mit einem Belüftungssystem der oben beschriebenen Art gerichtet.

Weiter Vorteile und Ausführungsformen ergeben sich aus den beigefügten Zeichnungen:

Darin zeigen:
- Fig. 1: eine erfindungsgemäße Betätigungseinrichtung;
- Fig. 2: die Betätigungseinrichtung aus Fig. 1 in einer Explosionsdarstellung;
- Fig. 3: eine Detaildarstellung der Betätigungseinrichtung aus Fig. 1 in einer weiteren Darstellung;
- Fig. 4: eine Draufsicht auf die Betätigungseinrichtung aus Fig. 1;
- Fig. 5: eine Vorderansicht der erfindungsgemäßen Betätigungseinrichtung;
- Fig. 6: eine Schnittdarstellung der Betätigungseinrichtung aus Fig. 1;
- Fig. 7: eine weitere Schnittdarstellung der Betätigungseinrichtung aus Fig. 1;
- Fig. 8: eine Darstellung einer erfindungsgemäßen Vorrichtung zum Belüften vom Fahrzeugen; und
- Fig. 9: eine Darstellung eines Belüftungssystems mit zwei Düsen.

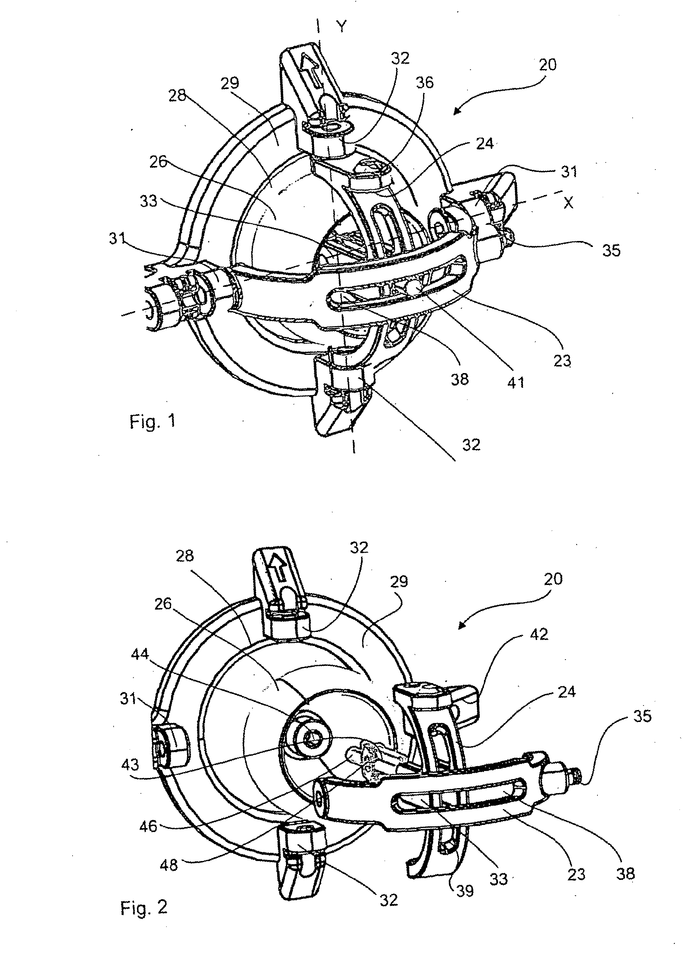

Fig. 1 zeigt eine erfindungsgemäße Betätigungseinrichtung in einer perspektivischen Darstellung. Diese Betätigungseinrichtung weist ein erstes Betätigungselement 23 auf, welches um eine (gestrichelt eingezeichnete) Achse X drehbar bzw. schwenkbar gelagert ist. Ein zweites Betätigungselement 24 ist um einer (gestrichelt eingezeichnete) Achse Y drehbar bzw. schwenkbar gelagert. Beide Betätigungselemente 23, 24 können mittels eines Mitnehmerstiftes 41 unabhängig voneinander verschoben werden. Dieser Mitnehmerstift ist, wie unten im Detail gezeigt wird, ebenfalls um die Achse X und Y drehbar angeordnet und steht in fester Verbindung mit einer Bedieneinrichtung 26. Diese Bedieneinrichtung 26 kann durch den Benutzer vom Fahrzeuginnenraum bedient werden.

Wenn die Bedieneinrichtung 26 in Fig. 1 nach unten gedreht wird hat dies zur Folge, dass sich das Betätigungselement 23 nach oben bewegt. Die Bedieneinrichtung 26 ist in dieser Ausführungsform als Kugelkalotte ausgeführt, die durch einen Ring 28 der Betätigungseinrichtung 20 gehalten wird.

Bei einer horizontalen Bewegung der Bedieneinrichtung 26 nach rechts bewegt sich der Mitnehmerstift 41 nach links.

Das Bezugszeichen 36 bezieht sich auf eine Gelenkeinrichtung, um eine (in Fig. 1 nicht gezeigte) Bewegungsübertragungseinrichtung anzulenken. Die Halterung 31, 32 dienen zur Lagerung der Betätigungselemente 23, 24.

Fig. 2 zeigt eine Explosionsahsicht der in Fig. 1 gezeigten Betätigungseinrichtung. Man erkennt, dass die Bedieneinrichtung 26 in der Mitte eine Fassung 44 zur Aufnahme eines Stifts 46 aufweist. Ein Haltelement 43 stellt die Verbindung zwischen der Bedieneinrichtung 26 und dem (in Fig. 2 nicht gezeigten) Mitnehmerstift 41 dar.

Das Betätigungselement 23 wird über (nicht gezeigte) Stifte an den Halterungen 31, 32 angelenkt. Auch die Anlenkung der oberen und unteren Enden des Betätigungselements 24 in den Haltelementen 32 erfolgt in gleicher Weise.

Das Bezugszeichen 33 bezieht sich auf eine Halteeinrichtung, die in fester Verbindung bzw. mit dem Betätigungselement 23 steht bzw. einteilig mit diesem ausgebildet ist und nach innen ragt. Die Halteeinrichtung 33 dient zur drehbaren Lagerung der Bedieneinrichtung 26, wie unten erläutert wird. Die Halterungen 31, 32 sind an einen Rahmen 29 fest angeordnet.

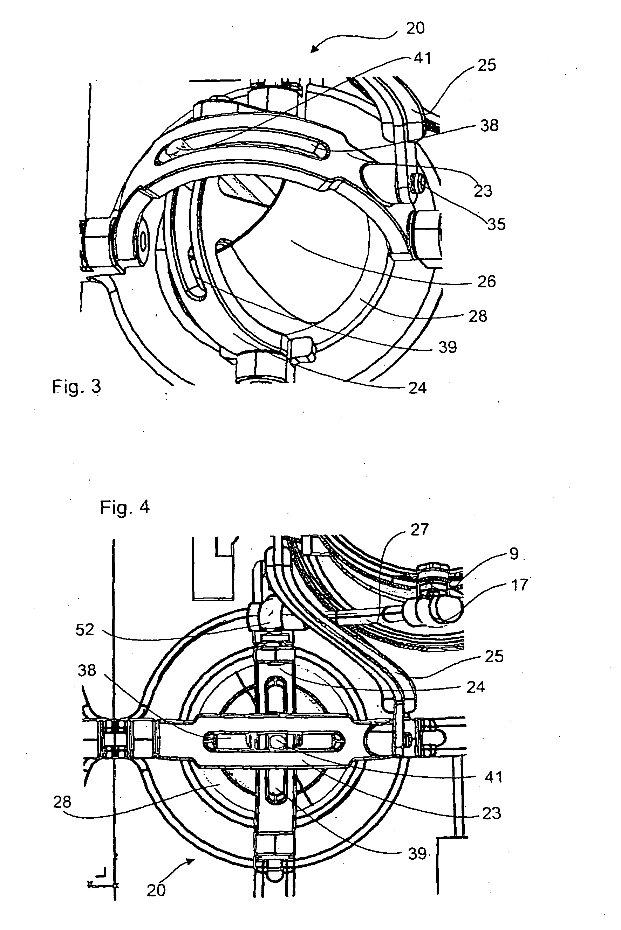

Fig. 3 zeigt eine weitere perspektivische Darstellung der erfindungsgemäßen Betätigungseinrichtung 20 . Das Bezugszeichen 25 bezieht sich auf eine erste Bewegungsübertragungseinrichtung, die über eine Lagerung 35 an dem Betätigungselement 23 drehbar angelenkt ist. Die Bewegungsübertragtunseinrichtung ist selbst bevorzugt starr ausgeführt und bewegt sich mit dem Betätigungselement 23 nach oben beziehungsweise nach unten.

In ähnlicher Weise ist auch an dem Betätigungselement 24 eine (in Fig. 3 nicht gezeigt) Bewegungsübertragungseinrichtung vorgesehen.

Fig. 4 zeigt eine Draufsicht auf die erfindungsgemäße Betätigungseinrichtung 20. Bei der in Fig. 4 gezeigten Darstellung befindet sich der Mitnehmerstift 41 in seiner zentralen Stellung. Der Mitnehmerstift 41 kann in einem horizontalen Langloch 38, das in dem Betätigungselement 23 angeordnet ist in einer horizontalen Richtung verschoben werden. Entsprechend ist auch ein Verschieben des Mitnehmerstifts in einem vertikalen Langloch 39 des zweiten Betätigungselements 24 möglich. Auch das Betätigungselement 24 ist, wie oben gezeigt, über ein Langer 52 in Verbindung mit der zweiten Bewegungsübertragungseinrichtung 27 zur Übertragung horizontaler Bewegungen. Die zweite Bewegungsübertragungseinrichtung 27 ist mittels eines Gelenkelements 17 und eines Lagers 9 mit dem (nicht gezeigten) Strömungskanal 5 gekoppelt. Durch eine geeignete Formgebung der ersten Bewegungsübertragungseinrichtung 25 und der zweiten Bewegungsübertragungseinrichtung 27 wird erreicht, dass diese sich gegenseitig nicht behindern, unabhängig von der jeweiligen Stellung der beiden Betätigungselemente 23 und 24. Damit dient die Bewegungsübertragungseinrichtung 25 für die Vertikalverstellung der Strömungsrichtung der aus der Düse austretenden Luft und die Bewegungsübertragungseinrichtung 27 zur Horizontalverstellung der austretenden Luft.

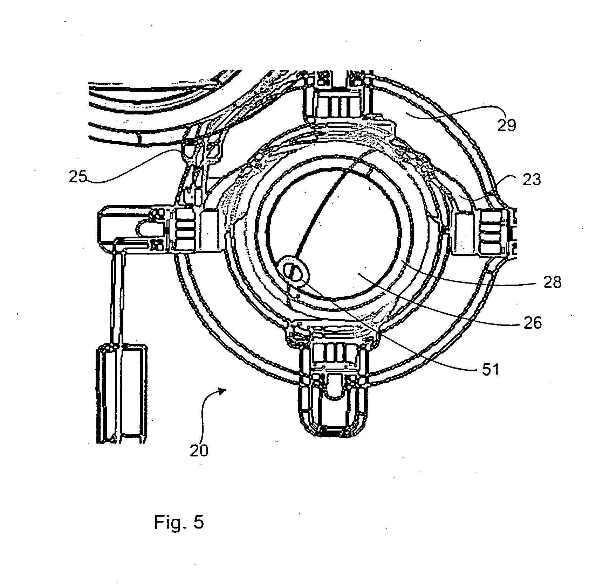

Fig. 5 zeigt eine vordere Ansicht der Betätigungseinrichtung 20, das heißt eine Ansicht wie sie sich dem Fahrer im Fahrzeuginnenraum darstellt. Zur Veranschaulichung wurden jedoch auch die an sich nicht sichtbaren Elemente wie das Betätigungselement 23, welches hinter dem Armaturenbrett liegt mit eingezeichnet. Die Bedieneinrichtung 26, welche, wie oben erwähnt, eine kugelförmige Gestalt aufweist, wird durch einen Ring 28 gehalten. Auf der Bedieneinrichtung 26 ist eine Markierung 51 angebracht, die dem Benutzer die Stellung der Bedieneinrichtung 26 anzeigt. Wenn die Markierung 51 im Zentrum des Rings 51 angeordnet ist, so bedeutet dies, dass die Strömungsrichtung der Düse gerade ausgerichtet ist, bzw. sich die Betätigungselemente 23, 24 in einer zentralen Stellung befinden.

Die Bedieneinrichtung, die hier als Kugelkalotte ausgeführt ist, kann auch aus einem transparenten Material gefertigt sein wodurch eine Beleuchtung der Bedieneinrichtung 26 ermöglicht wird. Auch kann die Bedieneinrichtung 26 aus einem selbstleuchtenden Material gefertigt sein. Anstelle einer Kugelkalotte kann auch ein Hebel vorgesehen sein.

Durch eine Drehung der Bedieneinrichtung 26 kann der Fahrer auf die Betätigungselemente 23 und 24 und damit auf die Strömungsrichtung der ersten Düse austretenden Luft einwirken.

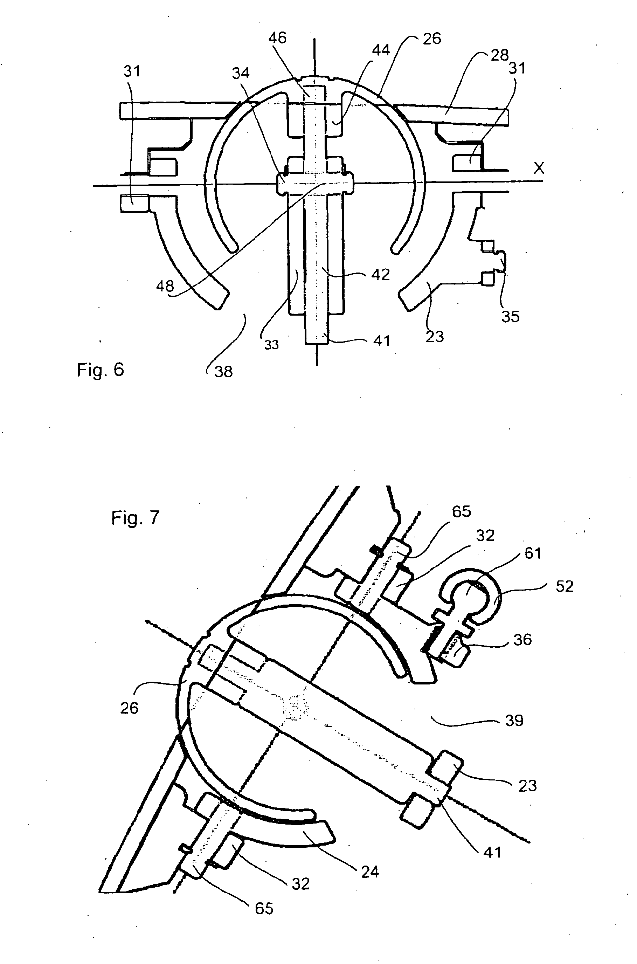

Fig. 6 zeigt einen Schnitt in der Ebene, die in Fig. 1 durch die X-Achse und die Z-Achse, welche auf der durch die X-Achse und die Y-Achse aufgespannten Ebene senkrecht steht, aufgespannt wird.

Man erkennt, dass, wie oben ausgeführt, die Bedieneinrichtung 26 eine Fassung 44 aufweist, in welche ein Stift 46 eingreift um so eine feste Verbindung zwischen der Bedieneinrichtung 26 und dem Mitnehmerstift 41 zu gewährleisten.

Der Mitnehmerstift 41 und der Stift 46 sind bevorzugt einteilig auf einem Drehkörper 42 als oberes und unteres Ende angeordnet.

Der Drehkörper 42 weist, wie oben erwähnt, eine Öffnung 48 auf, durch welche ein Stift 34 ragt. Die Bedieneinrichtung 26 ist mittels des Stiftes 34 drehbar gegenüber der Halteeinrichtung 33 die fest mit dem Betätigungselement 24 verbunden ist angeordnet wodurch im Ergebnis die Drehbarkeit der Bedieneinrichtung durch den Benutzer erreicht wird. Das Bezugszeichen 28 bezieht sich wiederum auf den Ring, durch welchen die Bedieneinrichtung 26 gehalten wird. In dem mit 38 gekennzeichneten Bereich ist das Langloch des Betätigungselementes 23, innerhalb dessen sich der Mitnehmerstift 41 bewegen kann, angeordnet.

Das Bezugszeichen 35 bezieht sich auf eine Lagereinrichtung, an der, wie oben erwähnt die Bewegungsübertragungseinrichtung 25 angelenkt wird.

Fig. 7 zeigt einen Schnitt in der durch die Y und die Z-Achse aufgespannten Ebene. Man erkennt, dass das Betätigungselement 24 gegenüber den Halterungen 32 mittels eines Stiftes 65 drehbar gelagert ist. Das Bezugszeichen 39 bezieht sich auf ein vertikales Langloch des zweiten Betätigungselements 24. Durch dieses Langloch wird gleichzeitig der Winkel bestimmt, um den das Bedienelement in vertikaler Richtung gedreht werden kann. Das Bezugszeichen 36 bezieht sich auf eine an dem Betätigungselement 24 angeordnete Gelenkeinrichtung in der ein Verbindungsstift 61 drehbar gelagert ist. An dem gegenüberliegenden Ende weist der Stift 61 einen Kopf auf, der wiederum in eine Gelenkeinrichtung 52 eingreift. Diese Gelenkeinrichtung 52 ist Bestandteil der (in Fig. 7 nicht gezeigten) Bewegungsübertragungseinrichtung 27.

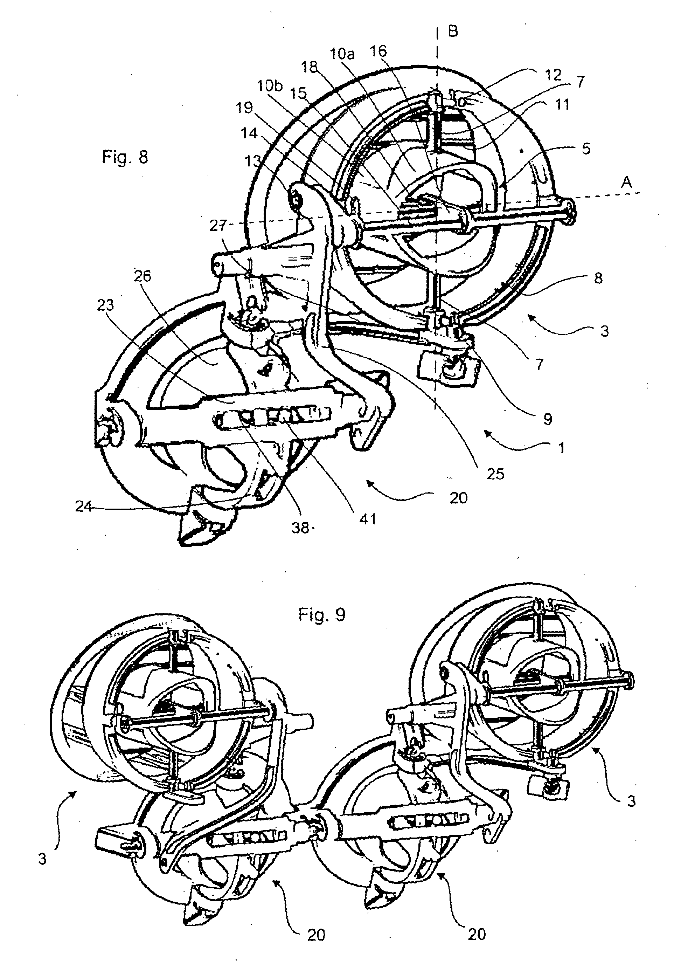

Fig. 8 zeigt eine Gesamtdarstellung einer Betätigungseinrichtung 20 und einer von dieser betätigten Düse 3. Wenn die Bedieneinrichtung 26 in horizontaler Richtung betätigt wird, wird das Betätigungselement 23 durch den Mitnehmerstift 41 nicht betätigt, da dieser sich innerhalb des Langloches 38 in horizontaler Richtung im Wesentlichen frei bewegen kann. Der Mitnehmerstift 41 betätigt jedoch das zweite Betätigungselement 24 und dreht es um die in Fig. 1 gezeigte Y-Achse. Durch diese Drehung wird auch die Bewegungsübertragungseinrichtung 27 bewegt, die für die Horizontalverstellung der Düse verwendet wird.

Das der Düse 3 zugewandte Ende der Bewegungsübertragungseinrichtung 27 ist über eine (im Detail nicht gezeigte) Lagereinrichtung an einer Drehplatte 9 angeordnet, die eine Drehbewegung einer Welle 7 bewirkt. Die Welle 7 ist fest mit dem ersten Strömungskanal 5, der in dieser Ausführungsform als Zylinder ausgeführt ist, verbunden. Dies bedeutet, dass sich bei dieser Ausführungsform nur der erste Strömungskanal 5 bewegen kann, wohingegen der zweite Strömungskanal 8 im Wesentlichen starr bleibt. Die Drehung des Srömungskanals 5 erfolgt damit um die (gestrichelt eingezeichnete) Achse B Der obere und untere Teil der Welle 7 ist drehbar an dem Gehäuse 6 der Düse über Gelenkverbindungen angelenkt.

Bei einer vertikalen Bewegung der Bedieneinrichtung 26 wird das Betätigungselement 24 nicht betätigt sondern der Mitnehmerstift 41 bewirkt lediglich eine Betätigung des ersten Betätigungselements 23, da sich der Mitnehmerstift innerhalb des vertikalen Langlochs des Betätigungselements 24 bewegen kann. Die Bewegung des Betätigungselements wird über die Bewegungsübertragungseinrichtung 25 auf einen Hebel 14 übertragen, der mittels eines Stiftes 13 gegenüber der zweiten Bewegungsübertragungseinrichtung 25 drehbar gelagert ist. Damit wird die von dem Betätigungselement 23 ausgeübte Kraft über die Welle 15 auf den ersten Strömungskanal 5 übertragen und bewirkt, dass dieser sich bei einer Betätigung der Bedieneinrichtung 26 ebenfalls in vertikaler Richtung bewegt.

Im Einzelnen wird bei einer Bewegung der Bedieneinrichtung 26 nach unten das Betätigungselement 23 nach oben bewegt. Durch diese Bewegung wird auch die Bewegungsübertragungseinrichtung 25 nach oben bewegt, und bewirkt wiederum über den Stift 13 und den Hebel 14 eine Drehung der Welle 15 im Uhrzeigersinn. Durch diese Drehung der Welle 15 im Uhrzeigersinn bewegt sich auch ein an der Well drehfest angeordneter gegabelter Arm 16 im Uhrzeigersinn.

Der erste Strömungskanal 5 ist gelenkig ausgebildet und weist zwei benachbarte und im Wesentlichen hohlzylindrisch ausgebildete Abschnitte 10a und 10b auf. Diese sind um je eine quer zur Längsrichtung der Düse angeordnete Achse A bzw. B verschenkbar, wobei die Achsen A und B senkrecht zueinander ausgerichtet sind. Während um die oben erwähnte Achse B beide Abschnitte 10a und 10b geschwenkt werden, wird um die Achse A nur der vordere Abschnitt 10b hier in vertikaler Richtung geschwenkt.

Durch die oben erwähnte Drehung des gegabelten Arms 16 im Uhrzeigersinn wird damit auch der hintere Abschnitt 10a nach oben geschwenkt, so dass im Ergebnis die Betätigung der Bedieneinrichtung in einer vertikalen Richtung nach unten auch ein nach - unten - Schwenken des Abschnitts 10b der Düse bewirkt. Umgekehrt bewirkt eine nach - oben - Bewegung der Bedieneinrichtung ein nach - oben - bewegen des Abschnitts 10b des Strömungskanals 5.

Der gegabelte Arm 16 bewirkt damit eine Bewegungsübertragung in vertikaler Richtung. Der gegabelte Arm 16 nimmt eine an dem zweiten Abschnitt 10b vorgesehene Querachse 18 schwenkbar und längsverschiebbar auf. Bei einer Drehung des gegabelten Arms 16 wird diese Querachse 18 jeweils mitgenommen. Die Mitnahme bewirkt, dass sich der zweite Abschnitt 10b gegenüber dem ersten Abschnitt 10a um ein Gelenk 19 sowie ein weiteres (nicht gezeigtes) Gelenk auf der gegenüberliegenden Seite des Strömungskanals 5 herum bewegt. Diese Gelenk sind in Figur 8 hinter der Querachse 18 angeordnet sodass bei einer Bewegung des gegabelten Arms 16 im Uhrzeigersinn der Abschnitt 10b um die Gelenke 19 herum gegen den Uhrzeigersinn und damit auch nach unten bewegt wird.

Alternativ kann über die Bewegungsübertragungseinrichtung 25 auch eine Ansteuerung der Lamellen 11 erfolgen so dass diese sich entsprechend schräg stellen. Auch könnten in vertikaler Richtung verlaufende Lamellen vorgesehen sein, die entsprechend durch zweite Bewegungsübertragungseinrichtung 27 angesteuert werden können. Auch sind Kombinationen aus vertikalen und horizontalen Lamellen für eine Steuerung der Strömungsrichtung der austretenden Luft denkbar.

Wie erwähnt, könnte eine Steuerung der bewegbaren Elemente der Düse 3 wie beispielsweise des ersten Strömungskanals 5 oder der Lamellen 11 auch über eine Zahnradsteuerung, Gummi oder Kettenantriebe, Gummiräder oder dergleichen vorgenommen werden. Auch könnten die Betätigungselemente 23 und/oder 24 über ihre Bewegung Motoren ansteuern die dann eine Steuerung des Strömungskanals 5 beziehungsweise der Lamellen vornehmen.

Fig. 9 zeigt ein Belüftungssystem für ein Fahrzeug, dass zwei Düsen 3 und zwei Betätigungseinrichtungen 20 aufweist. In diesem Fall kann die Steuerung beider Düsen 3 separat durch die jeweils zugeordnete Betätigungseinrichtung 3 erfolgen. Wie in Fig. 9 gezeigt, sind die jeweiligen Betätigungseinrichtungen 20 und die Düsen 3 zueinander symmetrisch aufgebaut. In einer anderen Ausführungsform wäre es möglich, über eine Betätigungseinrichtung beide Düsen anzusteuern. Dabei könnten die beiden Düsen miteinander über geeignete Gestänge beziehungsweise Bewegungsübertragungseinrichtungen verbunden werden, sodass die beiden Düsen synchron eingestellt werden.

Die in Fig. 9 gezeigte Ausführungsform ist jedoch insoweit bevorzugt, als in einem KFZ von einem Fahrer und einem Beifahrer unabhängig voneinander die Strömungsrichtung der Luft eingestellt werden kann. Das in Fig. 9 gezeigte Belüftungssystem kann beispielsweise im mittleren Bereich eines Kraftfahrzeugarmaturenbretts Anwendung finden. Entsprechende einzelne Belüftungsanordnungen können zusätzlich an der linken und rechten Seite des Kraftfahrzeugs angeordnet werden.

Sämtliche in den Anmeldeunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zur Belüftung von Fahrzeugen mit wenigstens einer Düse (3), deren Ausströmrichtung einstellbar ist, einer wenigstens teilweise außerhalb der Düse (3) angeordneten Betätigungseinrichtung (20) um die Ausströmrichtung der Düse (3) einzustellen, wobei die Betätigungseinrichtung (20) ein erstes um eine erste geometrische Achse (X) drehbares Betätigungselement (23) und ein zweites bezüglich einer zweiten geometrischen Achse (Y) bewegbares Betätigungselement (24) zur Einstellung der Ausströmrichtung sowie eine Bedieneinrichtung (26) zur Bedienung beider Betätigungselemente aufweist, wobei die Bedieneinrichtung (26) derart mit den Betätigungselementen (23,24) in Verbindung steht, dass durch eine Bedienung der Bedieneinrichtung (26) in einer ersten Bedienrichtung das erste Betätigungselement (23) und durch eine Bedienung der Bedieneinrichtung (26) in einer zweiten Bedienrichtung das zweite Betätigungselement (24) bewegt wird, wobei die Betätigungselemente (23, 24) zueinander im wesentlichen senkrecht angeordnete Führungselemente (38, 39) aufweisen, **dadurch gekennzeichnet, dass** die Bedieneinrichtung (26) einen Vorsprung (41) aufweist oder mit einem Vorsprung (41) verbunden ist, der wenigstens teilweise in den Führungselementen (38, 39) verläuft.

2. Vorrichtung nach Anspruch 1, **dadurch gekennzeichnet, dass** das erste Betätigungselement (23) über eine erste Bewegungsübertragungseinrichtung (25) und das zweite Betätigungselement (24) über eine zweite Bewegungsübertragungseinrichtung (27) mit der Düse (3) gekoppelt ist.

3. Vorrichtung nach wenigstens einem der vorangegangenen Ansprüche **dadurch gekennzeichnet, dass** sich ein kürzester Abstand der Achsen (X, Y) von einem ersten Punkt zwischen den Endpunkten der ersten Achse (X) zu einem zweiten Punkt zwischen den Endpunkten der zweiten Achse (Y) erstreckt.

4. Vorrichtung nach wenigstens einem der vorangegangenen Ansprüche, **dadurch gekennzeichnet, dass** das zweite Betätigungselement (24) drehbar um die zweite Achse (Y) angeordnet ist.

5. Vorrichtung nach wenigstens einem der vorangegangenen Ansprüche, **dadurch gekennzeichnet, dass** die erste Achse (X) und die zweite Achse (Y) im wesentlichen senkrecht zueinander angeordnet sind.

6. Vorrichtung nach wenigstens einem der vorangegangenen Ansprüche, **dadurch gekennzeichnet, dass** die erste Achse (X) und die zweite Achse (Y) einen gemeinsamen Schnittpunkt aufweisen.

7. Vorrichtung nach wenigstens einem der vorangegangenen Ansprüche, **dadurch gekennzeichnet, dass** die Düse (3) einen ersten um eine erste Drehachse (A) schwenkbaren ersten Strömungskanal (5) aufweist.

8. Vorrichtung nach Anspruch 7, **dadurch gekennzeichnet, dass** der erste Strömungskanal (5) um eine zweite Drehachse (B) schwenkbar ist.

9. Vorrichtung nach Anspruch 8, **dadurch gekennzeichnet, dass** die erste Drehachse (A) und die zweite Drehachse (B) im wesentlichen senkrecht zueinander sind.

10. Vorrichtung nach wenigstens einem der vorangegangenen Ansprüche, **dadurch gekennzeichnet, dass** die Düse einen zweiten, unbeweglichen Strömungskanal (8) aufweist.

11. Vorrichtung nach wenigstens einem der Ansprüche 7 - 10, **dadurch gekennzeichnet, dass** der erste Strömungskanal (5) im wesentlichen innerhalb des zweiten Strömungskanals (8) angeordnet ist.

12. Vorrichtung nach wenigstens einem der vorangegangenen Ansprüche, **dadurch gekennzeichnet, dass** die Düse schwenkbare Lamellen (11) aufweist.

13. Vorrichtung nach wenigstens einem der vorangegangenen Ansprüche, **dadurch gekennzeichnet, dass** wenigstens eine Bewegungsübertragungseinrichtung (25, 27) mit dem ersten Strömungskanal verbunden ist.

14. Vorrichtung nach wenigstens einem der vorangegangenen Ansprüche, **dadurch gekennzeichnet, dass** die Betätigungseinrichtung (20) einen Rahmen (29) aufweist, an dem wenigstens ein Betätigungselement (23, 24) angelenkt ist.

15. Vorrichtung nach wenigstens einem der vorangegangenen Ansprüche, **dadurch gekennzeichnet, dass** wenigstens eine Bewegungsübertragungseinrichtung (25, 27) mit wenigstens einem Betätigungselement (23, 24) über eine Gelenkverbindung verbunden ist.

16. Vorrichtung nach wenigstens einem der vorangegangenen Ansprüche, **dadurch gekennzeichnet, dass** die Bedieneinrichtung (26) wenigstens abschnittsweise eine kugelförmige Gestalt-aufweist.

17. Betätigungseinrichtung, insbesondere für eine Vorrichtung nach wenigstens einem der vorangegangenen Ansprüche mit einem ersten um eine erste geometrische Achse (X) drehbaren Betätigungselement (23) und einem zweiten bezüglich einer zweiten geometrischen Achse (Y) bewegbaren Betätigungselement (24) und einer Bedieneinrichtung (26) zur Bedienung beider Betätigungselemente (23, 24), wobei die Bedierieinrichtung (26) derart mit den Betätigungselementen (23,24) in Verbindung steht, dass durch eine Bedienung der Bedieneinrichtung in einer ersten Bedienrichtung das erste Betätigungselement (23) und durch eine Bewegung der Bedieneinrichtung in einer zweiten Bedienrichtung das zweite Betätigungselement (24) bewegt wird, wobei die Betätigungselemente (23, 24) zueinander im wesentlichen senkrecht angeordnete Führungselemente (38, 39) aufweisen, **dadurch gekennzeichnet, dass** die Bedieneinrichtung (26) einen Vorsprung (41) aufweist oder mit einem Vorsprung (41) verbunden ist, der wenigstens teilweise in den Führungselementen (38, 39) verläuft.

18. Belüftungssystem, insbesondere für ein Kraftfahrzeug, mit einer Vorrichtung nach wenigstens einem der vorangegangenen Ansprüche.

## Claims

1. Device (1) for ventilating vehicles, having at least one nozzle (3) whose outflow direction is adjustable, an actuating device (20) arranged at least partially outside the nozzle (3) for adjusting the outflow direction of the nozzle (3), such that the actuating device (20) comprises a first actuating element (23), which pivots about a first geometric axis (X), a second actuating element (24), which can move relative to a second geometric axis (Y) for adjusting the outflow direction, and a control device (26) for operating the two actuating elements, the control device (26) being connected to the actuating elements (23, 24) in such manner that by operating the control device (26) in a first operating direction, the first actuating element (23) is moved, and by operating the control device (26) in a second operating direction, the second actuating element (24) is moved, the actuating elements (23, 24) comprising guiding elements (38, 39) arranged substantially perpendicularly to one another, **characterised in that** the control device (26) has a projection (41) or is connected to a projection (41), which at least partially moves along in the guiding elements (38, 39).

2. Device according to Claim I, **characterised in that** the first actuating element (23) is coupled to the nozzle (3) by means of a first movement transmission device (25) and the second actuating element (24) is coupled to the nozzle (3) by means of a second movement transmission device (27).

3. Device according to at least one of the preceding claims, **characterised in that** a shortest spacing of the axes (X, Y) extends from a first point between the end points of the first axis (X) to a second point between the end points of the second axis (Y).

4. Device according to at least one of the preceding claims, **characterised in that** the second actuating element (24) is arranged so as to pivot about the second axis (Y).

5. Device according to at least one of the preceding claims, **characterised in that** the first axis (X) and the second axis (Y) are arranged substantially perpendicular to one another.

6. Device according to at least one of the preceding claims, **characterised in that** the first axis (X) and the second axis (Y) have a common point of intersection.

7. Device according to at least one of the preceding claims, **characterised in that** the nozzle (3) has a first flow duct (5) which can pivot about a first rotation axis (A).

8. Device according to Claim 7, **characterised in that** the first flow duct (5) can pivot about a second rotation axis (B).

9. Device according to Claim 8, **characterised in that** the first rotation axis (A) and the second rotation axis (B) are substantially perpendicular to one another.

10. Device according to at least one of the preceding claims, **characterised in that** the nozzle has a second, non-movable flow duct (8).

11. Device according to any of claims 7 to 10, **characterised in that** the first flow duct (5) is arranged substantially within the second flow duct (8).

12. Device according to at least one of the preceding claims, **characterised in that** the nozzle comprises lamellae (11) that can pivot.

13. Device according to at least one of the preceding claims, **characterised in that** at least one movement transmission device (25, 27) is connected to the first flow duct.

14. Device according to at least one of the preceding claims, **characterised in that** the actuating device (20) has a frame (29) to which at least one actuating element (23, 24) is articulated.

15. Device according to at least one of the preceding claims, **characterised in that** at least one movement transmission device (25, 27) is connected to at least one actuating element (23, 24) by means of a hinged joint.

16. Device according to at least one of the preceding claims, **characterised in that** the control device (26) is of spherical design, at least in part.

17. Actuating device, in particular for a device according to at least one of the preceding claims, having a first actuating element (23), which can pivot about a first geometric axis (X), a second actuating element (24), which can move relative to a second geometric axis (Y) and a control device (26) for operating the two actuating elements (23, 24), such that the control device (26) is connected to the actuating elements (23, 24) in such manner that by operating the control device (26) in a first operating direction the first actuating element (23) is moved, and by operating the control device (26) in a second operating direction the second actuating element (24) is moved, the actuating elements (23, 24) comprising guiding elements (38, 39) arranged substantially perpendicular to one another, **characterised in that** the control device (36) comprises a projection (41) or is connected to a projection (41) which at least partially moves along in the guiding elements (38, 39).

18. Ventilation system, in particular for a motor vehicle, having a device according to at least one of the preceding claims.

## Revendications

1. Dispositif (1) de ventilation de véhicules, comprenant au moins une buse (3) dont la direction d'écoulement est réglable, un dispositif d'actionnement (20) disposé au moins partiellement à l'extérieur de la buse (3), pour régler la direction d'écoulement de la buse (3), où le dispositif d'actionnement (20) présente un premier élément d'actionnement (23) pouvant tourner autour d'un premier axe géométrique (X) et un deuxième élément d'actionnement (24) mobile par rapport à un deuxième axe géométrique (Y) et servant au réglage de la direction d'écoulement, ainsi qu'un dispositif de commande (26) permettant l'utilisation des deux éléments d'actionnement, où le dispositif de commande (26) est en liaison avec les éléments d'actionnement (23, 24), de manière telle que le premier élément d'actionnement (23) soit déplacé dans une première direction de commande, par une utilisation du dispositif de commande (26), et que le deuxième élément d'actionnement (24) soit déplacé dans une deuxième direction de commande, par une utilisation du dispositif de commande (26), où les éléments d'actionnement (23, 24) présentent des éléments de guidage (38, 39) disposés sensiblement de façon perpendiculaire l'un par rapport à l'autre,
**caractérisé en ce que** le dispositif de commande (26) présente une partie saillante (41) ou bien est relié à une partie saillante (41) qui s'étend au moins partiellement dans les éléments de guidage (38, 39).

2. Dispositif selon la revendication 1, **caractérisé en ce que** le premier élément d'actionnement (23) est couplé à la buse (3) par un premier dispositif de transmission de mouvements (25), le deuxième élément d'actionnement (24) étant couplé à ladite buse par un deuxième dispositif de transmission de mouvements (27).

3. Dispositif selon au moins l'une ou l'autre des revendications précédentes, **caractérisé en ce qu'**une distance entre les axes (X, Y), la plus courte possible, s'étend depuis un premier point placé entre les points d'extrémité du premier axe (X), jusqu'à un deuxième point placé entre les points d'extrémité du deuxième axe (Y).

4. Dispositif selon au moins l'une quelconque des revendications précédentes, **caractérisé en ce que** le deuxième élément d'actionnement (24) est disposé en étant rotatif autour du deuxième axe (Y).

5. Dispositif selon au moins l'une quelconque des revendications précédentes, **caractérisé en ce que** le premier axe (X) et le deuxième axe (Y) sont disposés sensiblement de façon perpendiculaire l'un par rapport à l'autre.

6. Dispositif selon au moins l'une quelconque des revendications précédentes, **caractérisé en ce que** le premier axe (X) et le deuxième axe (Y) présentent un point d'intersection commun.

7. Dispositif selon au moins l'une quelconque des revendications précédentes, **caractérisé en ce que** la buse (3) présente un premier conduit d'écoulement (5) pouvant pivoter autour d'un premier axe de rotation (A).

8. Dispositif selon la revendication 7, **caractérisé en ce que** le premier conduit d'écoulement (5) est pivotant autour d'un deuxième axe de rotation (B).

9. Dispositif selon la revendication 8, **caractérisé en ce que** le premier axe de rotation (A) et le deuxième axe de rotation (B) sont disposés sensiblement de façon perpendiculaire l'un par rapport à l'autre.

10. Dispositif selon au moins l'une quelconque des revendications précédentes, **caractérisé en ce que** la buse présente un deuxième conduit d'écoulement fixe (8).

11. Dispositif selon au moins l'une quelconque des revendications 7 à 10, **caractérisé en ce que** le premier conduit d'écoulement (5) est disposé sensiblement à l'intérieur du deuxième conduit d'écoulement (8).

12. Dispositif selon au moins l'une quelconque des revendications précédentes, **caractérisé en ce que** la buse présente des lamelles pivotantes (11).

13. Dispositif selon au moins l'une quelconque des revendications précédentes, **caractérisé en ce qu'**au moins un dispositif de transmission de mouvements (25, 27) est relié au premier conduit d'écoulement.

14. Dispositif selon au moins l'une quelconque des revendications précédentes, **caractérisé en ce que** le dispositif d'actionnement (20) présente un cadre (29) sur lequel est articulé au moins un élément d'actionnement (23, 24).

15. Dispositif selon au moins l'une quelconque des revendications précédentes, **caractérisé en ce qu'**au moins un dispositif de transmission de mouvements (25, 27) est relié à au moins un élément d'actionnement (23, 24), par un assemblage articulé.

16. Dispositif selon au moins l'une quelconque des revendications précédentes, **caractérisé en ce que** le dispositif de commande (26) présente au moins partiellement une forme de type sphérique.

17. Dispositif d'actionnement, en particulier pour un dispositif selon au moins l'une quelconque des revendications précédentes, comprenant un premier élément d'actionnement (23) pouvant tourner autour d'un premier axe géométrique (X) et un deuxième élément d'actionnement (24) mobile par rapport à un deuxième axe géométrique (Y), et un dispositif de commande (26) permettant l'utilisation des deux éléments d'actionnement (23, 24), où le dispositif de commande (26) est en liaison avec les éléments d'actionnement (23, 24), de manière telle que le premier élément d'actionnement (23) soit déplacé dans une première direction de commande, par une utilisation du dispositif de commande, et que le deuxième élément d'actionnement (24) soit déplacé dans une deuxième direction de commande, par un mouvement du dispositif de commande, où les éléments d'actionnement (23, 24) présentent des éléments de guidage (38, 39) disposés sensiblement de façon perpendiculaire l'un par rapport à l'autre,
**caractérisé en ce que** le dispositif de commande (26) présente une partie saillante (41) ou bien est relié à une partie saillante (41) qui s'étend au moins partiellement dans les éléments de guidage (38, 39).

18. Système de ventilation, en particulier pour un véhicule automobile, comprenant un dispositif selon au moins l'une quelconque des revendications précédentes.
